# EUROPÄISCHE PATENTANMELDUNG

(11) **EP 2 743 635 A1**
(43) Veröffentlichungstag der Anmeldung: **18.06.2014**
(21) Anmeldenummer: 12197143.6
(22) Anmeldetag: 14.12.2012
(51) Int. Cl.: G01B 11/00

(54) **Lageerkennung von Bauteilen**

(71) Anmelder: Siemens Aktiengesellschaft, 80333 München (DE)
(72) Erfinder: Borchardt, Andy, 13349 Berlin (DE); Brett, Tobias, 12529 Schönefeld (DE); Felkel, Mario, 10115 Berlin (DE); Kyeck, Sascha Martin, 14197 Berlin (DE); Wilkenhöner, Rolf, 14532 Kleinmachnow (DE)

(57) **Zusammenfassung**

Durch die Vermessung der Orientierung des zu beschichtenden Bauteils (7) (gegenüber dem Beschichtungsroboter (10)) kann für jeden Bauteiltyp das Standardbeschichtungsprogramm verwendet werden, wobei für jede Position je nach ermittelter Abweichung eine Positionsänderung durchgeführt wird, um die Beschichtung durchzuführen.

## Beschreibung

Die Erfindung betrifft ein Verfahren, bei dem die geometrische Lage des Bauteils erkannt wird.

Bauteile wie Turbinenschaufeln werden oft beschichtet. Dabei wird je nach Bauteiltyp ein bestimmtes Beschichtungsprogramm, d.h. eine Verfahrensrichtung einer Beschichtungsdüse gegenüber der Turbinenschaufel festgelegt. Für thermische Spritzprozesse wird eine Produktion mit gleichbleibender Qualität der Beschichtung gefordert. Insbesondere für die Beschichtung von Turbinenschaufeln werden sehr enge Fertigungstoleranzen vorgegeben. Die Genauigkeit mechanischer Fertigungseinrichtungen wird aufgrund von Verschleiß und thermischer Verformung oft reduziert, so dass die Beschichtungsqualität häufig beeinträchtigt wird.

Thermische Spritzprozesse unterliegen für die Beschichtung von Turbinenschaufeln einem zeit- und ressourcenaufwändigen Qualifizierungsprozess. Ergebnis der Qualifizierung ist eine Prozessfreigabe nach Maßgabe vorgegebener Anlagenparameter, die nicht verändert werden sollen. Anlagen zum thermischen Spritzen werden bislang stets mit denselben Parametern eingerichtet, um das Ziel einer gleichbleibenden Prozessqualität zu erreichen. Dieses Ziel wird für das thermische Spritzen von Turbinenschaufeln jedoch nur teilweise erreicht. Üblicherweise ist die Zahl der prozessbestimmenden Anlagenparameter sehr hoch, so dass nicht alle Parameter in einer Freigabe festgelegt werden können. Behelfsweise bezieht sich eine Freigabe daher nur jeweils auf eine Anlage. Es wird davon ausgegangen, dass die nicht determinierten Parameter der Anlage stets konstant bleiben. Verschleiß (z.B. in den Robotergelenken, den Antrieben von Roboter und Drehkipptisch, Verschleiß in den Aufnahmen für die Vorrichtungen etc.) und der Austausch von Komponenten in Wartungsintervallen führt jedoch zu unerwünschten Maßabweichungen. Weitere Maßabweichungen resultieren aus der thermischen Beanspruchung von Spannvorrichtungen und Turbinenschaufeln. Die Vorrichtungen werden zudem durch die Aufbereitung nach dem Beschichten in ihrer Positioniergenauigkeit verändert, so dass die Position der Schaufel in der Vorrichtung nicht zu 100% reproduzierbar eingehalten werden kann und sich mit der Vorrichtungsnutzung zusätzlich verändert.

Produkte, die bereits einer Betriebsbeanspruchung ausgesetzt wurden und aufgearbeitet werden, sog. Refurbishment Turbinenschaufeln, weisen ursächlich durch den Betrieb und durch die erneute Oberflächenvorbereitung jeweils unterschiedliche Maße auf. Selbst Schaufeln aus der Neufertigung weisen Maßabweichungen vom Sollmodell auf, die an nicht bearbeiteten Oberflächen wegen der Gusstoleranz im Bereich von einigen Zehntel mm liegen können. Das führt dazu, dass die Position der zu beschichtenden Schaufel von der Sollposition, die Ausgangspunkt für die Entwicklung des Beschichtungsprogramms, abweicht. Aufgrund dieser räumlichen Verschiebung "passt" das qualifizierte und auszuführende Bewegungsprogramm nicht optimal zur zu beschichtenden Schaufel. Daraus resultieren Abweichungen in Schichtdicke, Porosität, Oberflächenrauhigkeit der Beschichtung. Dies kann inakzeptabel sein, so dass zeitaufwändige und kostspielige Nacharbeit erforderlich ist. Zumindest aber wird durch diese räumliche Verschiebung die Prozessfähigkeit des Beschichtungsprozesses beeinträchtigt.

Es ist daher Aufgabe der Erfindung dieses Problem zu lösen.

Die Aufgabe wird gelöst durch ein Verfahren gemäß Anspruch 1 und eine Vorrichtung gemäß Anspruch 7.

Zur Verbesserung der Prozessfähigkeit des Prozesses für die Beschichtung wird vorgeschlagen, dass die Position der Turbinenschaufel in der Anlage - das heißt, wenn die Turbinenschaufel über eine Vorrichtung in die Beschichtungsanlage, insbesondere einen Drehkipptisch, eingebaut ist - erfasst wird.

Dafür kommen Sensoren wie taktile Sensoren, Laserscan-Sensoren, induktive Sensoren, Ultraschallsensoren und bildgebende Verfahren in Frage. Danach wird das qualifizierte Bewegungsprogramm für die Beschichtung derart über geeignete Koordinatentransformationen im Raum verschoben, dass es so zur realen Schaufelposition verfährt, wie es während der Programmerstellung angenommen wurde.

Für die Bestimmung der Position (Abstand und Orientierung) der Schaufel in der Beschichtungsanlage sind Abweichungen der Sollgeometrie der Schaufel gemäß CAD-Modell zur realen Geometrie zu berücksichtigen. Dazu sind "Best-Fit" Algorithmen zu verwenden, die als Referenz z.B. das CAD-Modell, eine geeignete Masterschaufel oder eine empirisch ermittelte Schaufelgeometrie durch Vermessung von beliebig vielen Schaufeln ermittelt verwenden.

Die sensorische Bestimmung der Schaufelposition kann dabei nach dem Einrüsten der Anlage zu Beginn der Beschichtungen erfolgen, wobei vorgeschlagen wird, die Bestimmung für jeden Anlagentisch / jede Vorrichtung einzeln durchzuführen, oder sie kann für jede zu beschichtende Schaufel einzeln erfolgen oder zu beliebiger anderer Stelle während des Einrüstens oder der Fertigung von Schaufeln erfolgen.

In den Unteransprüchen sind weitere vorteilhafte Maßnahmen aufgelistet, die beliebig miteinander kombiniert werden können, um weitere Vorteile zu erzielen.

Es zeigen:
- Figuren 1, 3: eine Beschichtungsvorrichtung,
- Figur 2: die Erfindung,
- Figur 3: eine Turbinenschaufel

Die Figuren und die Beschreibung stellen nur Ausführungsbeispiele der Erfindung dar.

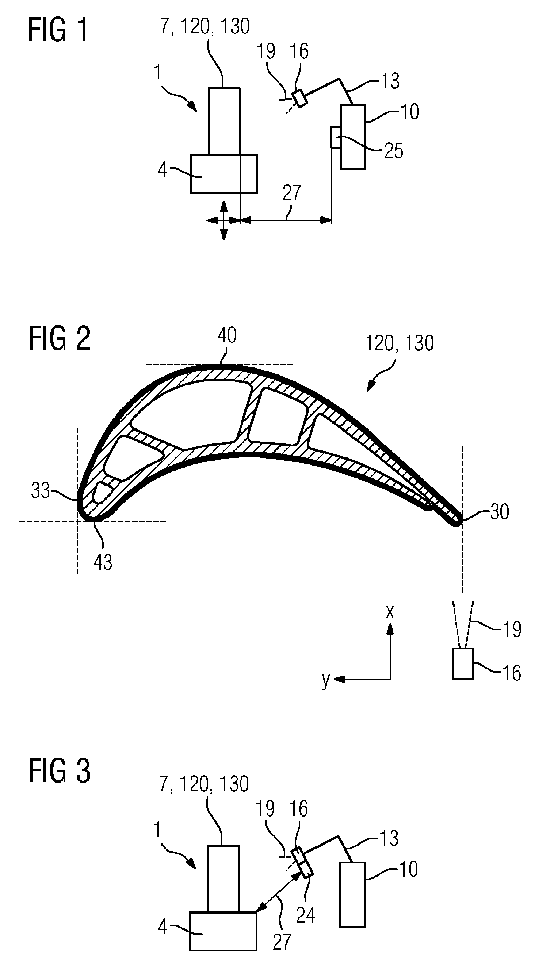

In Figur 1 ist eine Beschichtungsanlage 1 gezeigt.
Innerhalb der Beschichtungsanlage 1 ist eine Auflage oder eine Halterung 4 vorhanden, und/oder in der ein Bauteil 7, 120, 130 vorhanden ist, das beschichtet werden soll.

Die Erfindung wird nur beispielhaft anhand einer Beschichtungsanlage 1 erläutert.

Die Halterung 4 kann starr ausgebildet sein, ein Drehtisch oder einen Roboter darstellen, der das Bauteil 7, 120, 130 nur dreht oder in alle Richtungen bewegen kann.

Die Beschichtung erfolgt durch einen Beschichtungsroboter 10 mit seinen Roboterarmen 13 an dessen Ende eine Beschichtungsdüse 16 (nur beispielhaft) angebracht ist und aus der 16 Beschichtungsmaterial 19 ausströmt.
Die Erläuterung der Erfindung anhand einer Beschichtungsdüse 16 und einem ausströmenden Beschichtungsmaterial 19, hier Pulver, ist nur beispielhaft.

Für einen Bauteiltyp 7, 120, 130 ist ein festgelegtes Programm 11 für die Bewegung der Roboterarme 13 vorhanden, um die Beschichtung 14' zu erzielen.
Daher wird der Abstand 22 und/oder die genaue Orientierung 22 des Bauteils 7, 120, 130 gegenüber dem Beschichtungsroboter 10 in der Beschichtungsanlage 1 genau eingestellt.
Dabei können jedoch Fehler gemacht werden oder das Bauteil 7 selber weist Abweichungen auf, so dass es zu unterschiedlichen Abständen zwischen dem Bauteil 7 und dem Beschichtungsroboter 10 kommt.

In Figur 3 ist eine weitere Beschichtungsanlage 1 gezeigt. Jedoch muss in Figur 3 nicht auf einen bestimmten Abstand 22 der Orientierung zwischen Bauteil 7, 120, 130 und Beschichtungsroboter 10 geachtet werden.
Die Beschichtungsanlage 1 oder der Beschichtungsroboter 10 weist eine Messvorrichtung 25 auf, die den Abstand 22 und die Orientierung des Beschichtungsroboters 10 zum Bauteil 7, 120, 130 erfasst.
Dabei kann dann ermittelt werden, ob das Bauteil 7 in dem gewünschten Abstand und in der gewünschten Orientierung in der Halterung 4 eingebaut ist.

Werden keine Abweichungen festgestellt, so kann das fest vorgegebene Programm 11 des Beschichtungsroboters 10 zur Herstellung der Beschichtung 14 abgefahren werden.

Die Messvorrichtung 24 ist vorzugsweise an der Beschichtungsdüse 16 befestigt.

Ebenso ist es möglich, dass ein Roboter das Bauteil 1, 120, 130 hält und/oder verfährt und die Messvorrichtung 25 fest bezüglich der Vorrichtung 1 angeordnet ist (Fig. 1).

Werden Abweichungen festgestellt, so wird das Beschichtungsprogramm 11 des Roboters 10 trotzdem nicht verändert, sondern ein zusätzliches Adaptionsprogramm erzeugt, das für jeden Beschichtungsschritt eine veränderte Position der Beschichtungsdüse 16 gegenüber dem Bauteil 7 bestimmt und diese an die Roboterarme 13 für die Beschichtung weitergibt.

Da für jeden Bauteiltyp ein Beschichtungsprogramm 11 vorhanden ist und für jedes Bauteil 7, 120, 130 ein und desselben Bauteiltyps verwendet wird, wird jeweils vor der Beschichtung durch die Vermessung mittels der Vorrichtung 25 ein separates Adaptionsprogramm 12 ermittelt.
Durch dieses separate Adaptionsprogramm, das ein zweites Beschichtungsprogramm zusätzlich zu den fest installierten Programmen darstellt, werden die gewünschten Abstände und Orientierungen der Beschichtungsdüse 16 zum Bauteil 7 eingehalten und die gewünschte Beschichtungsqualität wird erreicht. Figur 2 zeigt einen Querschnitt durch ein zu beschichtendes Bauteil 7, hier eine Turbinenschaufel 120, 130 als beispielhaftes Bauteil.
Das Bauteil 7, 120, 130 ist auf einem Drehteller oder Halterung 4 angeordnet und hier in 0°-Stellung gezeigt.
Ebenso gezeigt ist die Beschichtungsdüse 16 mit dem Material 19, das ebenfalls bezüglich des Drehtellers in der 0°-Stellung orientiert ist, d.h. in X-Richtung.

Für eine solche gekrümmte Querschnittsfläche, hier eine Turbinenschaufel 120, 130, gibt es jeweils zwei Messpunkte (33, 30; 40, 43) für die X-Position und für die Y-Position, die erfindungsgemäß bestimmt werden.

Für die X-Orientierung sind das zwei Parallelen in Y-Richtung zur Anströmrichtung der Beschichtungsdüse 16 in der 0°-Stellung, die durch die entfernten Punkte 40, 43 des Bauteils 120, 130 verlaufen.
Als Messpunkte 33, 30 für die Y-Komponente dienen die Berührungspunkte der Parallelen in X-Richtung, die durch die am weitest voneinander entfernten Punkten in Y-Richtung verlaufen.

Somit kann das Bauteil oder die Turbinenschaufel 120, 130 bezüglich des Materialstrahls 19 optimal erfasst werden.

Zur Erfassung der Geometrie werden insbesondere die Bereiche genommen eines Bauteils, die eine komplexe Geometrie aufweisen.

Bei Turbinenschaufeln 120, 130 ist dies vorzugsweise das Schaufelblatt.

Ebenso kann es aber auch möglich sein, dass andere Bereiche eines Bauteils 7, 120, 130 zur Abstands/Orientierungsmessung zu verwenden, insbesondere wenn ein gewisser Bereich des Bauteils 7, 120, 130 eine Maskierungsschicht aufweisen, die unregelmäßig dick ist und die exakte Geometrie des Bauteils 7, 120, 130 verschleiert.
Im Falle einer Turbinenschaufel 120, 130 weist sie bei gewissen Bearbeitungsprozessen das Schaufelblatt 406 eine Maskierungsschicht auf, wie z.B. nach einer Innenalitierung, die entfernt werden soll. Dies geschieht durch abrasive Bestrahlung (Sandstrahlung).

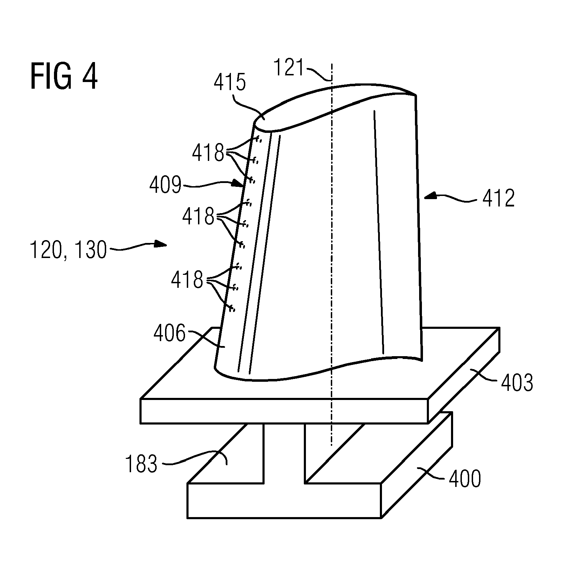

Dann wird zur Erfassung der Geometrie ein unbeschichteter Bereich der Turbinenschaufel 120, 130, vorzugsweise der Schaufelfuß 183 (Fig. 4) zur Orientierung verwendet.

Auch Oberflächenhärtungsverfahren, bei dem Düsen verwendet werden (Kugel, Laser), finden hier Anwendung.

Bezüglich der Orientierung von Bauteilen 7, 120, 130 und Robotern 10, 16 sind verschiedene Möglichkeiten denkbar. Sowohl das Bauteil 7, 120, 130 und/oder der Roboter können auf dem Kopf stehen.

Die Figur 4 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.
Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-l2Co-2lCr-11Al-0,4Y-2Re oder Ni-25Co-17Cr-10Al-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

## Patentansprüche

1. Verfahren zur Lageerkennung eines Bauteils (7, 120, 130) in einer Vorrichtung,
bei dem für die Orientierung der X-Koordinaten die Berührungspunkte (40, 43) von in Y-Richtung verlaufenden Parallelen mit dem Bauteil (7, 120, 130) genutzt werden,
die in X-Richtung am weitest voneinander entfernt sind, und/oder bei dem für die Orientierung der Y-Koordinaten die Berührungspunkte (30, 33) von in X-Richtung verlaufenden Parallelen mit dem Bauteil (7, 120, 130) genutzt werden, die in Y-Richtung am weitest voneinander entfernt sind.

2. Verfahren nach Anspruch 1,
bei dem das Bauteil (7, 120, 130) durch einen Roboter (4) gehalten und/oder verfahren wird.

3. Verfahren nach einem oder beiden der Ansprüche 1 oder 2,
bei dem das Bauteil (7, 120, 130) fest angeordnet ist.

4. Verfahren nach einem oder mehreren der Ansprüche 1 bis 3,
bei dem ein Lasertriangulationsverfahren zur Abstands- und/oder ein Laser zur Orientierungsbestimmung verwendet wird.

5. Verfahren nach einem oder mehreren der vorherigen Ansprüche,
bei dem die Abstands- und Orientierungsmessung in einem unbeschichteten Bereich des Bauteils (1, 120, 130) durchgeführt wird.

6. Verfahren nach einem oder mehreren der Ansprüche 1 bis 5,
bei dem ein Entschichtungsverfahren,
insbesondere eine Sandstrahlung oder
ein Verfestigungsverfahren durchgeführt wird,
oder
insbesondere eine Oberflächenhärtung,
ganz insbesondere eine Kugelbestrahlung oder Laserbestrahlung durchgeführt wird.

7. Vorrichtung (1),
insbesondere zur Durchführung des Verfahrens gemäß einem oder mehreren Anspruch 1 bis 6,
die zumindest aufweist:
eine Halterung (4) für ein Bauteil (7, 120, 130),
einen Roboter (10) eine Messvorrichtung (25),
die eine Orientierung und einen Abstand des Bauteils (7) gegenüber dem Roboter (10) bestimmt und
Abweichungen ermitteln kann,
bei dem Parallelen in Y-Richtung,
die durch die Berührungspunkte (40, 43) der in X-Richtung am weitest voneinander entferntesten Punkte des Bauteils (7, 120, 130) verlaufen,
die Orientierung der X-Koordinaten darstellen,
und/oder bei dem Parallelen in X-Richtung,
die durch die Berührungspunkte (40, 43) der in Y-Richtung am weitest voneinander entferntesten Punkte des Bauteils (7, 120, 130) verlaufen,
die Orientierung der Y-Koordinaten darstellen.

8. Vorrichtung nach Anspruch 7,
bei dem das Bauteil (7, 120, 130) durch einen Roboter gehalten und/oder verfahrbar ist.

9. Vorrichtung nach einem oder beiden der Ansprüche 7 oder 8,
bei dem das Bauteil (7, 120, 130) fest angeordnet ist.

10. Vorrichtung nach einem oder mehreren der Ansprüche 7 bis 9,
bei dem die Messvorrichtung (25) fest angeordnet ist.

11. Vorrichtung nach einem oder mehreren der Ansprüche 7 bis 10,
bei dem die Vorrichtung (1) eine thermische Beschichtungsanlage darstellt.

12. Vorrichtung nach einem oder mehreren der Ansprüche 7 bis 11,
die eine Sandstrahlanlage oder eine Oberflächenhärtungsanlage darstellt.
